# EUROPÄISCHE PATENTSCHRIFT

(11) **EP 2 633 212 B1**
(45) Veröffentlichungstag und Bekanntmachung des Hinweises auf die Patenterteilung: **02.01.2019**
(21) Anmeldenummer: 11766891.3
(22) Anmeldetag: 05.10.2011
(51) Int. Cl.: F16K 11/18

(54) **WEGEVENTIL**
DIRECTIONAL VALVE
DISTRIBUTEUR

(30) Priorität: 26.10.2010 DE 102010049370
(43) Veröffentlichungstag der Anmeldung: 04.09.2013
(73) Patentinhaber: Grohe AG, 58675 Hemer (DE)
(72) Erfinder: BEGEROW, Ralf, 58675 Hemer (DE)
(86) Internationale Anmeldenummer: PCT/EP2011/004968
(87) Internationale Veröffentlichungsnummer: WO 2012/055478

(56) Entgegenhaltungen:
- DE-A1- 3 836 352
- US-A- 2 598 605
- US-A- 4 874 006

## Beschreibung

Die Erfindung betrifft ein Wegeventil gemäß dem Oberbegriff des Patentanspruchs 1.

Für Sanitärarmaturen mit mehreren Anschlüssen für unterschiedliche Verbraucher wie Kopfbrause, Seitenbrausen und Handbrause sind Mehrwegeventile mit ebenen Dichtkörpern in Form von keramischen Dichtscheiben bekannt. In der DE 103 36 127 A1 ist ein Mehrwegeventil offenbart, das eine festsitzende und eine bewegliche Dichtscheibe umfasst, die jeweils eine oder mehrere Wasserdurchtrittsöffnungen aufweisen. Dabei sind die Wasserdurchtrittsöffnungen der beweglichen Dichtscheibe mit den jeweiligen Verbrauchern verbunden. Zur Ansteuerung der jeweiligen Anschlüsse und Verbraucher werden die Wasserdurchtrittsöffnungen der beweglichen Dichtscheibe durch deren Verdrehen in Überdeckung mit den Wasserdurchtrittsöffnungen der festsitzenden Ventilscheibe gebracht. Nach Absperren des Wasserzuflusses verbleibt das Mehrwegeventil in der jeweils letzten eingestellten Position.
Im Gegensatz dazu sind Mehrwegeventile bekannt, die Hubventile umfassen. Aus der DE 1 059 729 A1 ist ein zwischen Wannen- und Brausezufluss umstellbares Ventil mit einem zwischen zwei Ventilsitzen bewegbaren Ventilglied bekannt, das von einer Feder beaufschlagt ist, so dass es üblicherweise den Zulauf zu einem Wanneneinlauf freigibt. Das Ventilglied kann durch Drücken oder Ziehen in eine zweite Stellposition verschoben werden und verbleibt, während Wasser durch die Sanitärarmatur fließt, in der gewählten Position. Wenn der Wasserzufluss abgesperrt wird, kehrt das Ventilglied automatisch wieder in seine Ausgangsposition zurück.

Ferner ist aus der US 4,874,006 ein Umschaltventil mit einem Belüftungsventil bekannt. Die beschriebene Ausführungsform zeigt ein Drei-Wege-Umschaltventil, das Wasser zu einer Badewanne, einer Dusche oder einer Handbrause umlenken kann. Die Erfindung ist darauf gerichtet, einen bei den Umschaltvorgängen entstehenden Vakuumeffekt zu reduzieren und Druckstöße des Wasserdrucks zu vermeiden.

Schließlich ist aus der US 2,598,605 ein Umschaltventil bekannt, das mittels eines drehbaren Umstellelementes Flüssigkeiten von einem Einlass zu einem beliebigen Ausgang einer Mehrzahl von Ausgängen umlenken kann.

Vor diesem Hintergrund besteht die Aufgabe der Erfindung darin, ein Wegeventil zu verbessern.

Die Aufgabe wird durch ein Wegeventil mit den Merkmalen des Patentanspruchs 1 gelöst. Vorteilhafte Weiterbildungen sind Gegenstand von Unteransprüchen.

Mit der Erfindung wird ein Wegeventil mit mehreren Anschlüssen und wenigstens einem Steuerelement bereitgestellt, das in der Ausgangsposition des Wegeventils einen ersten Anschluss frei gibt, das manuell aus der Ausgangsposition in eine zweite Schaltposition verstellbar ist, bei Zulauf eines Fluids in der zweiten Schaltposition verbleibt und nach Absperren des Fluidzulaufs automatisch in die Ausgangsposition zurückkehrt. Im vorliegenden Fall ist das Wegeventil als 4/3-Wegeventil mit vier Anschlüssen in Form eines Einlasses und drei Auslässen sowie drei Schaltpositionen vorgesehen, wobei das Steuerelement in jeder Schaltposition jeweils einen der Auslässe freigibt und die übrigen Auslässe absperrt.

Das erfindungsgemäße Wegeventil kann somit in einer Sanitärarmatur eingesetzt werden, die mehrere Verbraucher, beispielsweise einen Wannenzulauf, eine Kopfbrause und eine Handbrause aufweist. Die Sanitärarmatur kann als Einhebelmischer oder als Thermostatarmatur vorgesehen sein. Das Wegeventil ist in einem Armaturengehäuse der Sanitärarmatur angeordnet und weist jeweils einen Auslass für jeden Verbraucher und einen Einlass für das Mischwasser auf, das durch einen Mischwasserkanal zu dem Wegeventil gelangt. Das Wegeventil ist als Hubventil vorgesehen, das wenigstens ein zwischen Ventilsitzen bewegbares Ventilglied oder Steuerelement aufweist.
In der Ausgangsposition des Wegeventils ist der Wannenzulauf der Sanitärarmatur freigegeben, um zu vermeiden, dass sich beim erneuten Öffnen eines Absperrventils Wasser unvorhergesehen aus der Kopfbrause oder der Handbrause auf den Nutzer ergießt. Durch Betätigen des Steuerelements sind drei Schaltpositionen des Wegeventils einstellbar. Bei laufendem Wasserzufluss verbleibt das Steuerelement in der jeweils eingestellten Schaltposition und kehrt nach Absperren des Wasserzuflusses wieder selbsttätig in die Ausgangsposition zurück.

Als Verstell- oder Betätigungsvorrichtung für das Steuerelement ist eine Spindel vorgesehen, wobei Steuerelement und Spindel relativ zueinander beweglich sind.
Die Erfindung sieht vor, dass das Steuerelement aus mindestens zwei Einzelelementen vorgesehen ist. Weiterhin sind die Einzelelemente des Steuerelements in Längsrichtung der Spindel und/oder relativ zueinander verschieblich.
Eine vorteilhafte Weiterbildung der Erfindung sieht zudem vor, dass die Ventilelemente von einem Ventilgehäuse umgeben sind, so dass das Wegeventil als Baueinheit oder Kartusche einsetzbar ist.
Eine Ausgestaltung der Erfindung sieht vor, dass die Einzelelemente des Steuerelements in Achsrichtung der Spindel mittels einer Feder voneinander beabstandet sind. Außerdem ist an dem ersten Einzelelement ein Ventilsitz für das zweite Einzelelement vorgesehen.

Mittels des erfindungsgemäßen Wegeventils können drei unterschiedliche Schaltpositionen realisiert werden. In der Ausgangsposition des Wegeventils ist das erste Einzelelement des Steuerelements beabstandet zum Doppelventilteller angeordnet, so dass das Fluid das erste Einzelelement axial durchströmt und über einen Auslass aus dem ersten Einzelelement in einen ersten Wasserzulaufkanal gelangt. Hierbei versperrt das erste Einzelelement mittels seiner Außenkontur einen zweiten Auslass und das zweite Einzelelement des Steuerelements liegt dichtend an einem Ventilsitz des dritten Auslasses an, wodurch dieser ebenfalls abgesperrt wird.

In einer zweiten Schaltposition des Wegeventils wird das zweite Einzelelement gegen die Kraft einer Feder in Richtung des ersten Einzelelements verschoben, so dass das zweite Einzelelement den Ventilsitz zu einem zweiten Auslass frei gibt, wobei das zweite Einzelelement am Ventilsitz des ersten Einzelelements anliegt und somit den ersten Auslass absperrt und das erste Einzelelement mittels seiner Außenkontur einen dritten Auslass absperrt.

In einer dritten Schaltposition des Wegeventils werden die Ventilspindel und mit dieser das erste Einzelelement des Steuerelements gegen die Kraft einer Feder in Richtung des zweiten Einzelelements verschoben, so dass das Fluid das erste Einzelelement umströmt und zu dem dritten Auslass gelangt, wobei das erste Einzelelement mittels seiner Außenkontur den ersten Auslass versperrt und das zweite Einzelelement an dem Ventilsitz des ersten Einzelelements und des zweiten Auslasses dichtend anliegt, wodurch dieser ebenfalls abgesperrt wird.

Als erstes Einzelelement für das Steuerelement ist hierbei eine Steuerhülse vorgesehen. Die Steuerhülse besitzt eine Außenkontur, die stufenförmig abgesetzt ist und an deren äußeren Kanten Dichtelemente in Form von Dichtungsringen oder O-Ringen angeordnet sind, wodurch Dichtkanten gebildet werden. Die Steuerhülse weist eine Durchgangsöffnung für die Spindel und einen Ringsraum zum Durchlass des Fluids auf.
Je nach Schaltstellung des Wegeventils kann die Steuerhülse somit fluidumströmt oder fluiddurchströmt sein. Aufgrund ihrer Bauform und Außenkontur wirkt die Steuerhülse des Steuerelements in jeder Schaltposition mit wenigstens zwei Ventilsitzen am Ventilgehäuse oder einem Armaturengehäuse zusammen.

Gemäß einer Ausgestaltung der Erfindung ist als zweites Einzelelement für das Steuerelement ein Doppelventilsteller angeordnet. Dieser besitzt zwei Dichtflächen, die mit zwei Ventilsitzen zusammen wirken können. Vorteilhafterweise ist zumindest ein Ventilsitz an dem Ventilgehäuse und ein Ventilsitz an der Steuerhülse vorgesehen. Der Doppelventilsteller kann somit je nach Schaltstellung des Wegeventils mit einem Ventilsitz oder mit zwei Ventilsitzen gleichzeitig zusammenwirken.

Ein Ausführungsbeispiel der Erfindung ist in der Zeichnung dargestellt und wird im Folgenden näher beschrieben. Es zeigt in der Zeichnung die
- Figur 1: einen Schnitt durch einen Teil einer Sanitärarmatur mit einem erfindungsgemäßen Wegeventil in der Normalposition für eine Wannenzuflussstellung;
- Figur 2: einen Schnitt durch einen Teil einer Sanitärarmatur mit einem erfindungsgemäßen Wegeventil in einer zweiten Schaltposition für eine Handbrause;
- Figur 3: einen Schnitt durch einen Teil einer Sanitärarmatur mit einem erfindungsgemäßen Wegeventil in einer dritten Schaltposition für eine Kopfbrause;
- Figur 4: ein erfindungsgemäßes Wegeventil mit einem Ventilgehäuse in perspektivischer Ansicht;
- Figur 5: eine perspektivische Ansicht eines Steuerkolbens in geschnittener Form.

In der Zeichnung sind gleiche oder entsprechende Elemente mit jeweils gleichen Bezugszeichen versehen. Die Pfeile in den Zeichnungen geben jeweils die Fließrichtung des Wassers oder Fluids wieder.

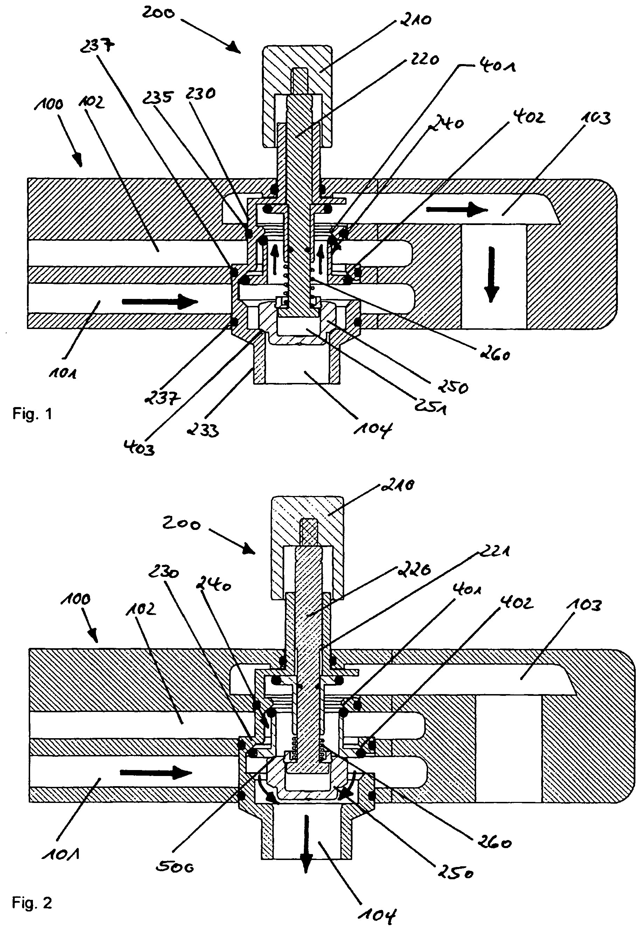

Figur 1 zeigt einen Schnitt durch einen Teil einer Sanitärarmatur 100 mit drei unterschiedlichen Verbrauchern. Im vorliegenden Fall handelt es sich um eine Einhebelmischbatterie, deren Mischwasser über einen Mischwasserkanal 101 von einer Mischkartusche (nicht dargestellt) zum Einlass 700 eines erfindungsgemäßen Wegeventils 200 geführt wird. Weiterhin weist die Armatur 100 drei Wasserzulaufkanäle 102, 103, 104 auf, die mit den jeweiligen Verbrauchern verbunden sind. Zur jeweiligen Verbindung des Mischwasserkanals 101 mit einem Wasserzulaufkanal 102, 103, 104 ist in der Sanitärarmatur 100 ein Wegeventil 200 angeordnet. Die Sanitärarmatur 100 weist einen Kanal 103 für einen Wannenzulauf, einen Kanal 102 für eine Kopfbrause und einen Kanal 104, der mit einer Handbrause verbunden werden kann, auf.

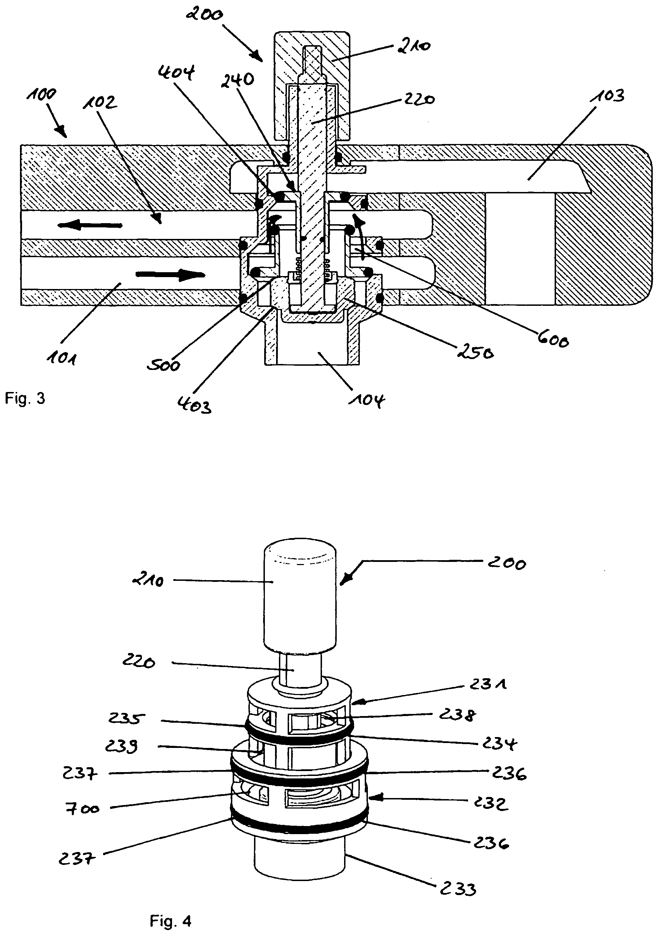

Das Wegeventil 200 ist als Baueinheit oder als Umstellventilkartusche vorgesehen. Wie aus Figur 4 ersichtlich ist, umfasst das Wegeventil 200 einen Betätigungsgriff 210, eine Ventilspindel 220 und ein Ventilgehäuse 230, in welchem das oder die Steuerelemente 240, 250 oder die Ventilglieder angeordnet sind.
Das einteilige Ventilgehäuse 230 des Wegeventils 200 weist entlang seiner Längsachse mehrere Querschnittssprünge auf, wobei die einzelnen Abschnitte 231, 232, 233 jeweils eine zylindrische Form haben. Die Höhe der Abschnitte 231, 232, 233 ist von den Abmessungen der Ein- und Auslasskanäle der Sanitärarmatur 100 abhängig. Zur dichten Anordnung des Wegeventils 200 in dem Armaturengehäuse 100 weist das Ventilgehäuse 230 mehrere radiale Nuten oder Ringnuten 234, 236 auf, in welchen Dichtelemente oder O-Ringe 235, 237 aufgenommen werden können. Alternativ dazu könnten die Dichtelemente auch am Armaturengehäuse angeordnet sein. In diesem Fall könnte die Außenhülle des Ventilgehäuses glatt ausgeführt sein.
Außerdem sind im Ventilgehäuse 230 radiale Öffnungen 238, 239 vorgesehen, die mit den Kanälen 101, 102 und 103 korrespondieren.
Im vorliegenden Beispiel stellt der untere zylindrische Abschnitt 233 des Ventilgehäuses 230 gleichzeitig einen Auslass des Wegeventils 200 dar und stimmt mit dem Wasserzulaufkanal 104 für die Handbrause überein. Weiterhin sind im Inneren des Ventilgehäuses 230 Ventilsitze oder Ventilsitzflächen 401, 402, 403 für die Steuerelemente 240, 250 ausgeformt.
Das Wegeventil 200 kann in eine dafür vorgesehene Stufenbohrung im Armaturengehäuse 100 eingesetzt werden. Anschließend wird der Betätigungsgriff 210 an der Ventilspindel 220 befestigt.
Das erfindungsgemäße Wegeventil 200 umfasst als Steuerelement zwei bewegliche Einzelelemente, eine Steuerhülse 240 und einen Doppelventilteller 250, die durch eine Stellfeder 260 voneinander getrennt sind. Die Außenkontur des Doppelventiltellers 250 ist so ausgeformt, dass dieser an seiner Ober- und Unterseite mit einem Ventilsitz 500, 403 zusammenwirken kann. Weiterhin ist in dem Doppelventilteller 250 eine Aufnahme für die Ventilspindel 220 angeordnet, in der diese verschieblich gelagert ist.
In der in Figur 1 dargestellten Normalposition oder Ausgangsposition des Wegeventils 200 ist der Auslass 238 des Wegeventils 200, der mit dem Wasserzulaufkanal 103 der Sanitärarmatur 100 korrespondiert, freigegeben.
Die Steuerhülse 240 des Steuerelements ist ebenfalls verschieblich an der Ventilspindel 220 gelagert. Zur Begrenzung des Verschiebewegs der Steuerhülse 240 ist an der Ventilspindel 220 ein Anschlag 221 in Form eines Falzes vorgesehen.

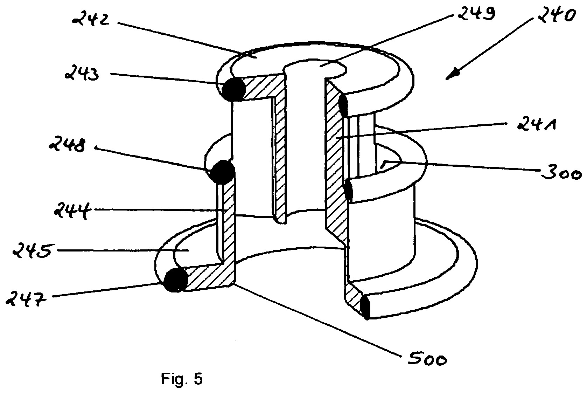

In Figur 5 ist die Form der Steuerhülse 240 näher dargestellt. Die Steuerhülse 240 besteht im Wesentlichen aus zwei Zylindern 241, 244 mit unterschiedlichen Durchmessern, die versetzt zueinander angeordnet und mittels radial angeordneten Steifen 246 miteinander verbunden sind. Der Innenzylinder 241 weist an seinem oberen Ende einen kreisförmigen Flansch 242 auf, der mit einem Dichtungselement 243 abschließt. Die innere Mantelfläche des Innenzylinders 241 bildet eine ebenfalls zylindrische Durchgangsöffnung 249 zum Hindurchführen der Ventilspindel 220.
Der Außenzylinder 244 weist an seinem unteren Ende einen kreisförmigen Flansch 245 auf, der ebenfalls mit einem Dichtelement 247 abschließt. Außerdem ist die obere abschließende Kante des Außenzylinders 244, die versetzt zu dem oberen Flansch 242 des Innenzylinders 241 angeordnet ist, ebenfalls mit einem Dichtelement 248 versehen, so dass durch die Zylinder 241, 244 und ihre Dichtelemente 243, 247, 248 Dichtkanten für die Steuerhülse 240 gebildet werden. Der Außenzylinder 244 und der Innenzylinder 241 bilden außerdem einen kreisringförmigen Kanal, einen inneren Ringkanal 300 für das Fluid. Je nachdem wie die Steuerhülse 240 jedoch im Ventilgehäuse 230 positioniert ist, kann das Fluid durch diese hindurch oder an der unteren Dichtkante 247 vorbei und um diese herum strömen. In letzterem Fall bilden Außenmantel des Außenzylinders 244 und das Innere des Ventilgehäuses 230 einen äußeren Ringkanal 600 für das Fluid.
Insgesamt weist die Steuerhülse 240 drei sowohl in axialer als auch in radialer Richtung versetzt zueinander angeordnete Dichtkanten auf, die jeweils mit einem Ventilsitz 401, 402, 403, 404 im Ventilgehäuse 230 zusammenwirken können. Außerdem bildet der Außenzylinder 244 mit seiner unteren inneren Kante zusätzlich einen weiteren Ventilsitz 500 für die obere Dichtfläche des Doppelventiltellers 250.

In der in Figur 1 dargestellten Normal- oder Ausgangsposition wirkt die Federkraft der zwischen Doppelventilteller 250 und Steuerhülse 240 angeordneten Feder 260 auf beide Einzelelemente des Wegeventils 200. Dadurch wird die Steuerhülse 240 nach oben und der Doppelventilteller 250 nach unten gedrückt. Die Steuerhülse 240 liegt mit ihrer unteren Dichtkante 247 und mittleren Dichtkante 248 an den Ventilsitzen 401, 402 des Ventilgehäuses 230 an. Außerdem liegt der Doppelventilteller 250 mit seiner unteren Dichtfläche am unteren Ventilsitz 403 des Ventilgehäuses 230 an. Dadurch verschließt der Doppelventilteller 250 den unteren Auslass 233 des Wegeventils 200.
Das Fluid gelangt durch den Mischwasserkanal 101 zum Einlass 700 des Wegeventils 200, durchströmt die Steuerhülse 240 durch ihren inneren Ringkanal 300 und gelangt zu den oberen Austrittsöffnungen 238 des Ventilgehäuses 230, so dass das Fluid weiter in den Kanal 103 strömen kann, der mit dem Wanneneinlauf verbunden ist.

Im Gegensatz dazu ist in Figur 2 das Wegeventil 200 in einer zweiten Schaltposition dargestellt. Durch Ziehen am Betätigungsgriff 210 wird die Ventilspindel 220 relativ zum Ventilgehäuse 230 und relativ zur Steuerhülse 240 bewegt. Da die Steuerhülse 240 in der Ausgangsposition bereits in Anschlagposition mit dem Ventilgehäuse 230 war, verbleibt diese in ihrer Position, während die Ventilspindel 220 relativ zu dieser verschoben wird. Mit der Ventilspindel 220 und gegen die Kraft der Feder 260 wird zudem der Doppelventilteller 250 vom Ventilsitz 403 gehoben.
Solange das Fluid durch das Wegeventil 200 strömt ist die Kraft, die durch den Wasserdruck auf den Doppelventilteller 250 wirkt, größer als die Rückstellkraft der Feder 260, so dass der Doppelventilteller 250 in seiner Position verbleibt.
Nach Absperren der Fluidzufuhr entfällt die durch den Wasserdruck ausgeübte Kraft und die Rückstellkraft der Feder 260 führt das Wegeventil 200 selbsttätig wieder in die Ausgangsposition und die Wannenzuflussstellung zurück.

In dieser Schaltposition liegt die Steuerhülse 240 mit ihrer unteren Dichtkante 247 und mittleren Dichtkante 248 an den Ventilsitzen 401, 402 des Ventilgehäuses 230 an. Außerdem liegt der Doppelventilteller 250 mit seiner oberen Anlagefläche am Ventilsitz 500 der Steuerhülse 240 an. Dadurch verschließt der Doppelventilteller 250 den inneren Ringkanal 300 der Steuerhülse 240. Das Mischwasser gelangt durch den Mischwasserkanal 101 zum Einlass des Wegeventils 200, strömt an dem Doppelventilteller 250 vorbei und gelangt zur unteren Austrittsöffnung bzw. zum unteren Auslass 233 des Ventilgehäuses 230, welcher gleichzeitig den Kanal 104 zur Verbindung mit einer Handbrause bildet.

In Figur 3 ist das Wegeventil 200 in einer dritten Schaltposition dargestellt. Durch Druck auf den Betätigungsgriff 210 wird die Ventilspindel 220 aus der Ausgangsposition wiederum relativ zum Ventilgehäuse 230 bewegt. Da die Steuerhülse 240 in der Ausgangsposition bereits in Anschlagposition mit der Ventilspindel 220 war, wird diese mit der Ventilspindel 220 relativ zu dem Doppelventilteller 250 gegen die Kraft der Feder 260 verschoben, wodurch die Steuerhülse 240 von den Ventilsitzen 401 und 402 geschoben wird und die zugehörigen Ventilöffnungen 239 freigegeben werden.
Solange das Fluid durch das Wegeventil 200 strömt ist die Kraft, die durch den Wasserdruck auf den unteren Flansch 245 der Steuerhülse 240 wirkt, größer als die Rückstellkraft der Feder 260, so dass die Steuerhülse 240 in ihrer Position verbleibt.
Nach Absperren der Fluidzufuhr entfällt die durch den Wasserdruck ausgeübte Kraft und die Rückstellkraft der Feder 260 führt das Wegeventil 200 wiederum selbsttätig wieder in die Ausgangsposition und die Wannenzuflussstellung zurück.

In der dritten Schaltposition liegt die Steuerhülse 240 mit ihrer oberen Dichtkante 243 am Ventilsitz 404 des Ventilgehäuses 230 an. Außerdem liegt der Doppelventilteller 250 mit seiner unteren Dichtfläche am Ventilsitz 403 des Ventilgehäuses 230 und mit seiner oberen Dichtfläche am Ventilsitz 500 der Steuerhülse 240 an. Dadurch verschließt der Doppelventilteller 250 sowohl den inneren Ringkanal 300 der Steuerhülse 240 als auch den Auslass 233. Das Mischwasser gelangt durch den Mischwasserkanal 101 zum Einlass 700 des Wegeventils 200, strömt entlang der äußeren Mantelfläche der Steuerhülse 240 durch den von Steuerhülse 240 und Ventilgehäuse 230 gebildeten äußeren Ringkanal 600 und gelangt zu den mittleren Austrittsöffnungen 239 des Ventilgehäuses 230, welche mit dem Kanal 102 zur Versorgung einer Kopfbrause verbunden sind.

### Bezugszeichenliste

- 100: Sanitärarmatur, Armaturengehäuse
- 101: Mischwasserkanal
- 102: Wasserzulaufkanal Kopfbrause
- 103: Wasserzulaufkanal Wanne
- 104: Wasserzulaufkanal Handbrause
- 200: Wegeventil
- 210: Betätigungsgriff
- 220: Ventilspindel
- 221: Anschlag
- 230: Ventilgehäuse
- 231: zylindrischer Abschnitt des Ventilgehäuses
- 232: zylindrischer Abschnitt des Ventilgehäuses
- 233: unterer zylindrischer Abschnitt des Ventilgehäuses, Auslass
- 234: Ringnut
- 235: Dichtelement
- 236: Ringnut
- 237: Dichtelement
- 238: radiale Öffnung, Auslass
- 239: radiale Öffnung, Auslass
- 240: erstes Einzelelement des Steuerelements, Steuerhülse
- 241: Innenzylinder
- 242: Flansch Innenzylinder
- 243: Dichtelement des Innenzylinders, obere Dichtkante der Steuerhülse
- 244: Außenzylinder
- 245: Flansch Außenzylinder
- 246: Steife
- 247: Dichtelement des Außenzylinders, untere Dichtkante der Steuerhülse
- 248: Dichtelement des Außenzylinders, mittlere Dichtkante der Steuerhülse
- 249: Durchgangsöffnung für die Ventilspindel
- 250: zweites Einzelelement des Steuerelements, Doppelventilteller
- 260: Rückstellfeder
- 300: innerer Ringkanal
- 401: Ventilsitzfläche
- 402: Ventilsitzfläche
- 403: Ventilsitzfläche
- 404: Ventilsitzfläche
- 500: Ventilsitz für Doppelventilteller
- 600: äußerer Ringkanal
- 700: Einlass des Wegeventils

## Patentansprüche

1. 4/3 Wegeventil (200) für eine Sanitärarmatur (100) mit
- vier Anschlüssen in Form eines Einlasses (700) und drei Auslässen (233, 238, 239) sowie drei Schaltpositionen
- wenigstens einem Steuerelement (240, 250),
-- das in jeder Schaltposition jeweils einen der Auslässe frei gibt und die übrigen Auslässe absperrt,
-- das in der Ausgangsposition des Wegeventils (200) einen ersten Auslass (238) frei gibt,
- - das aus der Ausgangsposition in eine zweite Schaltposition verstellbar ist,
- - bei Zulauf eines Fluids in der zweiten Schaltposition verbleibt und
- - nach Absperren des Fluidzulaufs automatisch in die Ausgangsposition zurückkehrt, **dadurch gekennzeichnet, dass** das Steuerelement mindestens aus zwei Einzelelementen (240, 250) vorgesehen ist und an dem ersten Einzelelement (240) ein Ventilsitz für das zweite Einzelelement (250) vorgesehen ist.

2. 4/3 Wegeventil (200) nach Anspruch 1, **dadurch gekennzeichnet, dass** als Verstellvorrichtung für das Steuerelement (240, 250) eine Spindel (220) vorgesehen ist, wobei Steuerelement (240, 250) und Spindel (220) relativ zueinander beweglich sind.

3. 4/3 Wegeventil (200) nach Anspruch 1 oder 2, **dadurch gekennzeichnet, dass** die Einzelelemente (240, 250) des Steuerelements in Längsrichtung der Spindel (220) und/oder relativ zueinander verschieblich sind.

4. 4/3 Wegeventil (200) nach einem der Ansprüche 1 bis 3, **dadurch gekennzeichnet, dass** die Einzelelemente (240, 250) des Steuerelements in Längsrichtung der Spindel (220) mittels einer Feder (260) voneinander beabstandet sind.

5. 4/3 Wegeventil (200) nach einem der Ansprüche 1 bis 4, **dadurch gekennzeichnet, dass** das Einzelelement (240) oder die Einzelelemente (240, 250) des Steuerelements je nach Schaltstellung des Wegeventils (200) fluidumströmt oder fluiddurchströmt sein können.

6. 4/3 Wegeventil (200) nach einem der vorhergehenden Ansprüche, **dadurch gekennzeichnet, dass** die Ventilelemente (220, 240, 250) von einem Ventilgehäuse (230) umgeben sind, so dass das Wegeventil (200) als Baueinheit oder Kartusche einsetzbar ist.

7. 4/3 Wegeventil (200) nach Anspruch 6, **dadurch gekennzeichnet, dass** das Ventilgehäuse (230) mehrteilig ist.

8. 4/3 Wegeventil (200) nach einem der Ansprüche 1 bis 7, **dadurch gekennzeichnet, dass** in der Ausgangsposition des Wegeventils (200) die Einzelelemente (240, 250) des Steuerelements beabstandet zueinander angeordnet sind, so dass das Fluid das erste Einzelelement (240) axial durchströmt und zu dem ersten Auslass des Wegeventils (200) gelangt, wobei das erste Einzelelement (240) mittels seiner Außenkontur einen zweiten Auslass versperrt und das zweite Einzelelement (250) des Steuerelements an einem Ventilsitz (403) des dritten Auslasses dichtend anliegt.

9. 4/3 Wegeventil (200) nach einem der Ansprüche 1 bis 7, **dadurch gekennzeichnet, dass** in einer zweiten Schaltposition des Wegeventils (200) durch Hinabdrücken der Ventilspindel (220) das erste Einzelelement (240) gegen die Kraft einer Feder (260) in Richtung des zweiten Einzelelements (250) verschoben wird, so dass das Fluid das erste Einzelelement (240) umströmt und zu dem zweiten Auslass gelangt, wobei das erste Einzelelement (240) mittels seiner Außenkontur den ersten Auslass versperrt und das zweite Einzelelement (250) des Steuerelements an einem Ventilsitz (500) des ersten Einzelelements (240) und des dritten Auslasses dichtend anliegt.

10. 4/3 Wegeventil (200) nach einem der Ansprüche 1 bis 7, **dadurch gekennzeichnet, dass** in einer dritten Schaltposition des Wegeventils (200) durch Ziehen der Ventilspindel (220) das zweite Einzelelement (250) gegen die Kraft einer Feder (260) in Richtung des ersten Einzelelements (240) verschoben ist, so dass das zweite Einzelelement (250) den Ventilsitz zum dritten Auslass frei gibt, wobei das zweite Einzelelement (250) am Ventilsitz (500) des ersten Einzelelements (240) anliegt und somit den ersten Auslass absperrt und das erste Einzelelement (240) mittels seiner Außenkontur den zweiten Auslass absperrt.

11. 4/3 Wegeventil (200) nach einem der Ansprüche 1 bis 10, **dadurch gekennzeichnet, dass** als erstes Einzelelement (240) für das Steuerelement eine Steuerhülse vorgesehen ist.

12. 4/3 Wegeventil (200) nach Anspruch 11, **dadurch gekennzeichnet, dass** die Steuerhülse (240) des Steuerelements in jeder Schaltposition mit wenigstens zwei Ventilsitzen (401, 402, 403, 404) am Ventilgehäuse (230) oder einem Armaturengehäuse (100) zusammenwirkt.

13. 4/3 Wegeventil (200) nach einem der Ansprüche 1 bis 12, **dadurch gekennzeichnet, dass** als zweites Einzelelement (250) für das Steuerelement ein Doppelventilteller vorgesehen ist.

## Claims

1. 4/3 Directional control valve (200) for a sanitary fitting (100), having
- four ports in the form of an inlet (700) and three outlets (233, 238, 239) and three switching positions,
- at least one control element (240, 250),
- - which in each switching position unblocks one of the outlets and shuts off the other outlets,
- - which in the starting position of the directional control valve (200) unblocks a first outlet (238),
- - which is movable from the starting position to a second switching position,
-- on inflow of a fluid remains in the second switching position and,
-- after the fluid inflow has been shut off, automatically returns to the starting position,
**characterised in that** the control element is provided from at least two individual elements (240, 250) and a valve seat for the second individual element (250) is provided on the first individual element (240).

2. 4/3 Directional control valve (200) according to claim 1, **characterised in that** a spindle (220) is provided as adjusting device for the control element (240, 250), the control element (240, 250) and the spindle (220) being movable relative to one another.

3. 4/3 Directional control valve (200) according to claim 1 or 2, **characterised in that** the individual elements (240, 250) of the control element are displaceable in the longitudinal direction of the spindle (220) and/or relative to one another.

4. 4/3 Directional control valve (200) according to any one of claims 1 to 3, **characterised in that** the individual elements (240, 250) of the control element are spaced apart from one another in the longitudinal direction of the spindle (220) by means of a spring (260).

5. 4/3 Directional control valve (200) according to any one of claims 1 to 4, **characterised in that** fluid is able to flow around or through the individual element (240) or the individual elements (240, 250) of the control element, depending upon the switching position of the directional control valve (200).

6. 4/3 Directional control valve (200) according to any one of the preceding claims, **characterised in that** the valve elements (220, 240, 250) are surrounded by a valve housing (230), so that the directional control valve (200) is insertable as a module or cartridge.

7. 4/3 Directional control valve (200) according to claim 6, **characterised in that** the valve housing (230) is multi-part.

8. 4/3 Directional control valve (200) according to any one of claims 1 to 7, **characterised in that**, in the starting position of the directional control valve (200), the individual elements (240, 250) of the control element are arranged spaced apart from one another, so that the fluid flows axially through the first individual element (240) and passes to the first outlet of the directional control valve (200), the first individual element (240) shutting off a second outlet by means of its external contour and the second individual element (250) of the control element being in sealing contact with a valve seat (403) of the third outlet.

9. 4/3 Directional control valve (200) according to any one of claims 1 to 7, **characterised in that**, in a second switching position of the directional control valve (200), by depression of the valve spindle (220) the first individual element (240) is displaced against the force of a spring (260) in the direction of the second individual element (250), so that the fluid flows around the first individual element (240) and passes to the second outlet, the first individual element (240) shutting off the first outlet by means of its external contour and the second individual element (250) of the control element being in sealing contact with a valve seat (500) of the first individual element (240) and of the third outlet.

10. 4/3 Directional control valve (200) according to any one of claims 1 to 7, **characterised in that**, in a third switching position of the directional control valve (200), by pulling of the valve spindle (220) the second individual element (250) has been displaced against the force of a spring (260) in the direction of the first individual element (240), so that the second individual element (250) unblocks the valve seat to the third outlet, the second individual element (250) being in contact with the valve seat (500) of the first individual element (240) and accordingly shutting off the first outlet and the first individual element (240) shutting off the second outlet by means of its external contour.

11. 4/3 Directional control valve (200) according to any one of claims 1 to 10, **characterised in that** a control sleeve is provided as first individual element (240) for the control element.

12. 4/3 Directional control valve (200) according to claim 11, **characterised in that** the control sleeve (240) of the control element in each switching position co-operates with at least two valve seats (401, 402, 403, 404) on the valve housing (230) or a fitting housing (100).

13. 4/3 Directional control valve (200) according to any one of claims 1 to 12, **characterised in that** a double valve disc is provided as second individual element (250) for the control element.

## Revendications

1. Distributeur (200) destiné à une robinetterie sanitaire (100) comprenant quatre branchements sous la forme d'une entrée (700) et de trois sorties (233, 238, 239) ainsi que trois positions de commutation,
au moins un élément de commande (240, 250) qui :
dans chaque position de commutation libère respectivement l'une des sorties et bloque les autres sorties,
qui, dans la position initiale du distributeur (200) libère une première sortie (238),
qui, à partir de la position initiale peut être déplacé dans une seconde position de commutation,
reste dans la seconde position de commutation lors de la circulation d'un fluide, et
après blocage de la circulation du fluide revient automatiquement dans la position initiale,
**caractérisé en ce que**
l'élément de commande est constitué d'au moins de deux éléments individuels (240, 250), et, sur le premier élément individuel (240) est prévu un siège de soupape pour le second élément individuel (250).

2. Distributeur (200) conforme à la revendication 1,
**caractérisé en ce qu'**
en tant que dispositif de réglage de l'élément de commande (240, 250) il est prévu une broche (220), l'élément de commande (240, 250) et la broche (220) étant mobiles l'un par rapport à l'autre.

3. Distributeur (200) conforme à la revendication 1 ou 2,
**caractérisé en ce que**
les éléments individuels (240, 250) de l'élément de commande peuvent coulisser dans la direction longitudinale de la broche (220) et/ou l'un par rapport à l'autre.

4. Distributeur (200) conforme à l'une des revendications 1 à 3, **caractérisé en ce que**
les éléments individuels (240, 250) de l'élément de commande sont écartés l'un de l'autre dans la direction longitudinale de la broche (220) par un ressort (260).

5. Distributeur (200) conforme à l'une des revendications 1 à 4,
**caractérisé en ce que**
l'élément individuel (240) ou les éléments individuels (240, 250) de l'élément de commande peut(peuvent) être ou ne pas être traversé(s) par un fluide selon la position de commutation du distributeur (200).

6. Distributeur (200) conforme à l'une des revendications précédentes,
**caractérisé en ce que**
les éléments de soupape (220, 240, 250) sont entourés par un boîtier de soupape (230) de sorte que le distributeur (200) puisse être monté en tant qu'unité ou en tant que cartouche.

7. Distributeur (200) conforme à la revendication 6,
**caractérisé en ce que**
le boîtier de soupape (230) est réalisé en plusieurs parties.

8. Distributeur (200) conforme à l'une des revendications 1 à 7,
**caractérisé en ce que**
dans la position initiale du distributeur (200), les éléments individuels (240, 250) de l'élément de commande sont situés à distance les uns des autres de sorte que le fluide traverse axialement le premier élément individuel (240) et parvienne à la première sortie du distributeur (200), le premier élément individuel (240) bloquant la seconde sortie par son contour externe et le second élément individuel (250) de l'élément de commande s'appliquant hermétiquement contre le siège de soupape (403) de la troisième sortie.

9. Distributeur (200) conforme à l'une des revendications 1 à 7,
**caractérisé en ce que**
dans la seconde position de commutation du distributeur (200), un enfoncement de la broche de soupape (220) permet de déplacer le premier élément individuel (240) contre la force d'un ressort (260) dans la direction du second élément individuel (250) de sorte que le fluide circule autour du premier élément individuel (240) et parvienne à la seconde sortie, le premier élément individuel (240) bloquant la première sortie par son contour externe et le second élément individuel (250) de l'élément de commande s'appliquant hermétiquement contre un siège de soupape (500) du premier élément individuel (240) et de la troisième sortie.

10. Distributeur (200) conforme à l'une des revendications 1 à 7,
**caractérisé en ce que**
dans une troisième position de commutation du distributeur (200), un tirage de la broche de soupape (220), permet de déplacer le second élément individuel (250) contre la force d'un ressort (260) dans la direction du premier élément individuel (240) de sorte que le second élément individuel (250) libère le siège de soupape vers la troisième sortie, le second élément individuel (250) s'appliquant contre le siège de soupape (500) du premier élément individuel (240) et bloquant ainsi la première sortie, et le premier élément individuel (240) bloquant la seconde sortie par son contour externe.

11. Distributeur (200) conforme à l'une des revendications 1 à 10,
**caractérisé en ce qu'**
en tant que premier élément individuel (240) pour l'élément de commande il est prévu une douille de commande.

12. Distributeur (200) conforme à la revendication 11,
**caractérisé en ce que**
dans chaque position de commutation la douille de commande (240) de l'élément de commande coopère avec au moins deux sièges de soupape (401, 402, 403, 404) situés sur le boîtier de soupape (230) ou un boîtier de robinetterie (100).

13. Distributeur (200) conforme à l'une des revendications 1 à 12,
**caractérisé en ce que**
en tant que second élément individuel (250) pour l'élément de commande il est prévu une double coupelle de soupape.
